# EUROPEAN PATENT APPLICATION

(11) **EP 1 903 466 A1**
(43) Date of publication of application: **26.03.2008**
(21) Application number: 06291478.3
(22) Date of filing: 20.09.2006
(51) Int. Cl.: G06F 21/00, G07F 7/10, H04L 29/06, H04L 29/08

(54) **A method for communicating with a personal token, comprising encapsulating a request inside a response**

(71) Applicant: Axalto S.A., 92190 Meudon (FR)
(72) Inventor: Ganem, Hervé, Axalto S.A., 92190 Meudon (FR); Sjarif, Krishna, Axalto S.A., 92190 Meudon (FR)
(74) Representative: Jacquot, Ludovic R. G.

(57) **Abstract**

The invention relates to a method for communicating with a personal token (10) over an IP network, in which method a request is made to the personal token and the personal token provides a response to this request, the method being characterized in that it comprises the step which consists in encapsulating (20) the said request to the personal token inside a message which is a response to a prior request emitted by the personal token for the purpose of such encapsulation.

## Description

The invention relates to secure personal tokens which are able to communicate over the internet.

Secure personal tokens are used for authenticating a user when such user accesses to a limited or a private resources equipment such as a mobile telecommunication network, a remote service hosted on a remote server or even a protected area with limited physical access thereto.

The mostly known device of this type is the IC card such as for example a SIM card (Subscriber Identification Module) or a credit card, but it can also be a USB key, a mass memory card, or any kind of token carrying some necessary credentials.

Such tokens are typically compliant with international standard ISO7816.

Secure Personal tokens have been proposed which are able to send a request to a remote server over the internet and to take account of a response thereof.

However, it is needed at present to enable a personal token to take account of a request incoming thereto i.e. a request originating from a remote entity over the internet. A possible application of this is an HTTP request which can be serviced by a web server located on the token This can be used to provide a remote access to documents stored in the Sim card..

Enabling a SIM card to do so faces many difficulties, among which the following ones:

First, the path of an incoming request goes through at least one - and typically several - firewalls which are implemented by the mobile phone operator. Such firewalls are specifically aimed at blocking certain messages incoming onto the handset and thereafter onto the SIM card, thereby typically blocking an HTTP request.

The same problem results from the use of private IP addresses on the operator network associated to the use of Network address translation techniques which will make difficult the routing of incoming messages to a specific handsetSecondly, signalization problems exist, which simply result from the fact that a remote entity - and any intermediary entity - may simply not know where, physically and logically, the personal token is to be found on the network.

Thirdly, due to the fact that the personal token is inside a host, a request which is intended to the personal token must first be taken in charge by the host itself, i.e. taken into account by the host as specifically directed to the personal token, for example as an internet based request to the personal token.

In such respect it is a main purpose of the invention to provide a method for allowing a personal token such as an IC card to reliably be reached by an incoming request which has transited over the internet.

This purpose is achieved by way of the invention as it is recited in the appended claims.

Other purposes, benefits and aspects of the invention will appear through the following description, which is made in reference to the appended figures, among which:
Figure 1 is a simplified illustration of a possible structure over which the invention is implemented.
Figure 2 is an illustration of a more detailed such structure.
Figure 3 is a diagram illustrating different successive steps occurring in a preferred embodiment of the invention.
Figure 4 represents an alternate embodiment of the invention.

In the following description, a request will be considered as a first flow of data which is expected to be followed by a response. Such response has to be considered as a flow of data which transits in the opposite direction to the first flow of data and which is identified by an element of the network as logically following the first flow of data.

The flows of data will typically be in the form of packets when in the frame of IP protocols.

Although described in the frame of TCP over IP protocol, it also has to be understood that the invention may be applied advantageously without using the whole aspects of TCP, for example in the frame of the simple UDP protocol. UDP provides the benefit of allowing more freedom so as to concentrate only on some aspects expected throughout the present invention. UDP transfers are connectionless and results in particular in a lower amount of exchanged data, which is important in the case of a personal token which is a highly constrained device as to memorizing and processing abilities.

The present reverse TCP is a generic method which enables access to Classic (APDU based) SIM cards in general and to APDU based SCWS (Smart Card Web Server) in particular from any node in the Internet. For example, it allows to browse the content of a SIM phonebook from Internet Explorer hosted in a remote PC.

Two applications (elements) as building blocks are identified here for this solution: an RTCP user agent (applet) in a SIM card 10, an RTCP server 20 remotely placed.

The protocol used on top of TCP or UDP can be anything, preferably SIP, or HTTP. .

here is no need for any agent or application installed in the handset. The only requirement for handset is here to support a BIP client according to ETSI TS standard.

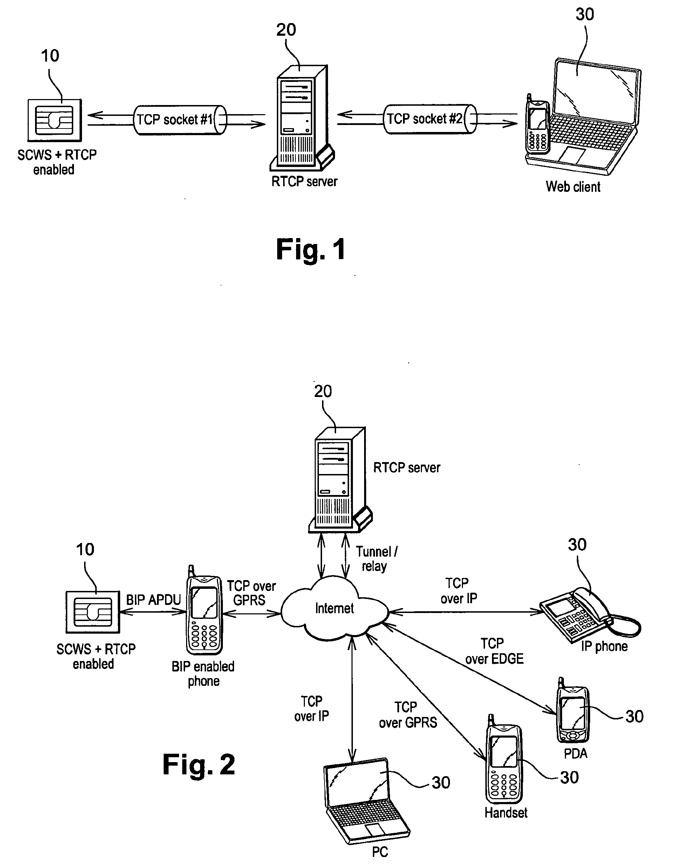

One aspect for the presently described RTCP (Reverse TCP) method is a tunnelling mechanism done in an RTCP server. It accepts TCP connection from a RTCP user agent (in SIM card) and keeps the connection open indefinitely (until it is closed by the SIM). This tunnelling mechanism is referred to as a socket and is referenced socket #1 on figure 1.

RTCP server 20 will listen to another port so as to listen for any web request from a client 30 which may be for example a remote mobile handset or a connected PC. This other port is referenced as socket #2 on figure 2. Every incoming request on this socket#2 will be tunnelled (forwarded) to the TCP socket #1.

A response message from the SIM 10 will then again be tunnelled back to the TCP socket #2.

Therefore, a request is made to the personal token and the personal token provides a response to this request, and a step consists in encapsulating the said request to the personal token inside a message which is a response to a prior request emitted by the personal token for the purpose of such encapsulation.

A step consists in using the RTCP server as a server which receives the prior request from the personal token. The RTCP server receives the request to be encapsulated and which originates from Web client 30, the RTCP server encapsulating such request in the said response to the prior request

The path of an incoming request goes through at least one - and typically several - firewalls which are implemented by the mobile phone operator. Such firewalls are specifically aimed at blocking certain messages incoming onto the handset and thereafter onto the SIM card, thereby typically blocking an HTTP request.

As concerns any Firewall or NAT being possibly present on the path of the requests and responses, because such a TCP connection is initiated from the SIM 10, the request from web client 30 can be forwarded through network firewalls to SCWS in SIM 10 because the firewalls have been opened by the prior request from the SIM 10.

Secondly, signalization problems exist, which simply result from the fact that a remote entity - and any intermediary entity - may simply not know where, physically and logically, the personal token is to be found on the network.

This is solved thanks to the fact that the prior request from the SIM 10 has indicated to the RTCP server the right path for being reached by the response.

As concerns a present TCP connection timeout, TCP connection between SCWS 10 and RTCP server 20 must always remain OPEN, even if there is no data transfer. Theoretically we can set the TCP timeout as indefinite from client and server point of view.

In the case of UDP, if UDP connection is closed somehow (either because of timeout or other reason), RTCP user agent 30 or a similar intermediary agent may reopen the same channel.

The SIM card 10, the RTCP server 20 or the remote entity 30, here the SIM card as a preferred embodiment, sends repetitive messages so as to keep the channel open although time-out is monitored.

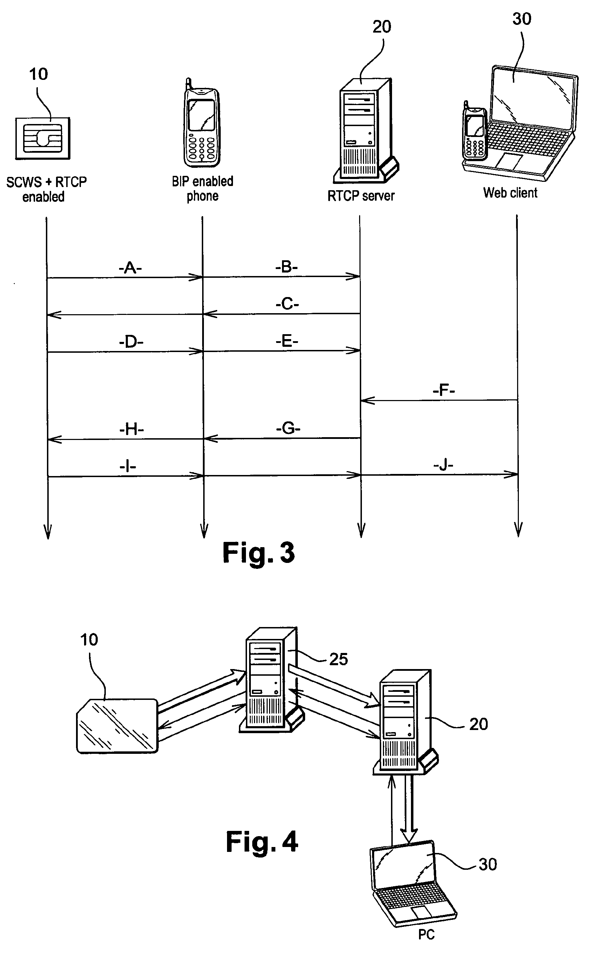

On figure 3, steps A to J are represented which correspond to the following actions.
Step a : Open TCP channel to RTCP server port XXX
Step b : Open TCP connection to RTCP server port XXX
Step C : TCP connection OK
Step d : Send Data (SCWS id) to register to RTCP server
Step e : Data sent through TCP socket. *TCP connection is kept open until SCWS send CLOSE CNANNEL. Now,RTCP server listen to port YYY*
Step f : Send request to RTCP port YYY to browse SCWS with certain ID
Step g : RTCP server tunnel the incoming request to the TCP socket with SCWS
Step h : Web client request is forwarded by handset to SIM through BIP
Step i : SCWS response is passed through SIP
Step j : SCWS response is forwarded back to client by RTCP server

Implementation of SIP on top of RTCP creates a more natural solution. RTCP server is replaced by SIP server, while RTCP agent in the SIM is replaced by SIP user agent.

More generally and corresponding to SIP as to this aspect, a step consists in requiring the SIM card and a Web client which aims at sending a request to the SIM card to both register by an intermediary server such as RTCP server 20 before the Web client sends the request, so as to allow a transfer of data between the SIM card and the Web client.

According to an advantageous embodiment illustrated on figure 4, RTCP server 20 is used which receives the said prior request from the SIM card 10 and which receives the request to be encapsulated from the web client 30, the RTCP server 20 encapsulating such request in the said response to the prior request, and an additional element 25 sends repetitive messages. Said additional element 25 is a server which is distinct from the RTCP server 20.

Here are several samples of applications which can use the presently described RTCP embodiment. The list is not exhaustive.

In a first example allowing phonebook management, a user can view/modify/synchronize his contacts in SIM with a PC, a PDA, without taking the SIM card out from the mobile handset.

For some data synchronization rendered possible, data can be synchronized in SIM with server, for example: phone book, management object, etc, allowing Remote personalization of SIM, Peer to peer synchronization (SIM - SIM, SIM - PC, etc).

SIM based DRM (Digital Right Management) is also allowed, by putting the RO (Right Object) in the SIM, and all application in PC that want to play the content can get the RO directly from SIM.

More generally, a SIM based web service is rendered possible.

At the level of the SCWS hosted in SIM 10, a hosted portal can be accessed from a PC 30 which is connected to the internet. The SCWS portal 10 can be accessed from another handset/PDA. The portal in SCWS 10 can also be accessed from the same handset or PDA (in case the handset only supports a BIP client but not a BIP server for example) by the hereabove described means.

An authentication service is also allowed. The SIM card 10 can provide a web service which may be accessible to the public. An authentication algorithm for e-commerce can also be run inside SIM card using the web service.

## Claims

1. A method for communicating with a personal token (10) over an IP network , in which method a request is made to the personal token and the personal token provides a response to this request, the method being **characterized in that** it comprises the step which consists in encapsulating (20) the said request to the personal token inside a message which is a response to a prior request emitted by the personal token for the purpose of such encapsulation.

2. The method according to claim 1, **characterized in that** it comprises the step which consists in using an intermediary server (20) which receives the said prior request from the personal token (10) and which receives the request to be encapsulated and which originates from an entity (30) over the IP network , the said intermediary server encapsulating such request in the said response to the prior request.

3. The method according to the preceding claim, **characterized in that** it comprises the step which consists in requiring the personal token (10) and a remote entity (30) over the IP network which aims at sending a request to the personal token to both register with the said intermediary server before the remote entity sends the request, so as to allow a transfer of data between the personal token and the remote entity.

4. The method according to claim 3, **characterized in that** it comprises the step which consists in taking account inside the intermediary server (20) of a message coming from the said remote entity and forwarding such message from the intermediary server to the personal token.

5. The method according to anyone of claims 2 to 4, **characterized in that** it consists in using a SIP server (20) as the intermediary server, and performing a SIP signalisation for linking the remote entity and the personal token.

6. The method according to anyone of claims 2 to 5, **characterized in that** the intermediary server (20) is an HTTP server.

7. The method according to anyone of the preceding claims, **characterized in that**, while at least one module is provided on a communication path between the personal token (10) and the remote entity (30) and including those, which module is programmed for monitoring a time duration and opposing to a transfer of response beyond said duration after the said prior request, one of the elements among the personal token, an intermediary server and the said entity sends repetitive messages which are sufficiently close in time so as to re-initialise the monitoring of time which is made by said at least one module.

8. The method according to the preceding claim, **characterized in that** the said element, which sends repetitive messages among the personal token, the intermediary server and the said entity is the personal token (10).

9. The method according to claim 7, **characterized in that** the said element which sends repetitive messages among the personal token, the intermediary server and the said entity is the intermediary server (20).

10. The method according to claim 7, **characterized in that** it comprises the step which consists in using an intermediary server (20) which receives the said prior request from the personal token and which receives the request to be encapsulated and which originates from an entity over the internet, the said intermediary server encapsulating such request in the said response to the prior request, and the said element which sends repetitive messages among the personal token (10), the intermediary server and the said entity is a server which is distinct from such intermediary server.
